# EUROPEAN PATENT SPECIFICATION

(11) **EP 2 237 553 B1**
(45) Date of publication and mention of the grant of the patent: **09.05.2012**
(21) Application number: 10150534.5
(22) Date of filing: 12.01.2010
(51) Int. Cl.: H04N 5/44, H04N 5/46

(54) **Video processing apparatus and video processing method**
Videoverarbeitungsvorrichtung und Videoverarbeitungsverfahren
Appareil de traitement vidéo et procédé de traitement vidéo

(30) Priority: 31.03.2009 JP 2009085882
(43) Date of publication of application: 06.10.2010
(73) Proprietor: Kabushiki Kaisha Toshiba, Tokyo 105-8001 (JP)
(72) Inventor: Sato, Jun, Tokyo 105-8001 (JP); Ohashi, Jun, Tokyo 105-8001 (JP); Watanabe, Keiko, Tokyo 105-8001 (JP); Nose, Natsuki, Tokyo 105-8001 (JP); Nagahama, Kentaro, Tokyo 105-8001 (JP)
(74) Representative: Henkel, Breuer & Partner

(56) References cited:
- JP-A- 2009 055 629
- US-A- 5 852 612
- US-A1- 2006 176 374
- US-A1- 2007 130 610
- US-A1- 2008 092 164
- US-A1- 2009 124 295
- US-B1- 6 556 251

## Description

The present invention relates to video processing apparatuses for converting digital broadcasts content, and in particular to a video processing apparatus and a video processing method capable of multiplexing video, audio and closed-closed caption which is received from simulcasts for mobile terminals.

Generally, digital terrestrial broadcasting includes 12-segments digital broadcasting and 1-segment digital broadcasting. The 12-segments digital broadcasting is intended to transmit high-definition programs for home televisions, and the 1-segment digital broadcasting is intended to transmit moving video that is fit for mobile terminals such as mobile telephones. Considering that different powers are required to receive a 12-segments digital broadcast and a 1-segment digital broadcast, a technique has been disclosed, in which a digital broadcast to be received is switched to a broadcast with higher sensitivity, according to the radio wave condition.

When reception is switched between a 12-segments digital broadcast and a 1-segment digital broadcast while a digital broadcast receiver is being operated, however, the problem occurs that the content of the operation becomes ineffective. Further, since the 12-segments digital broadcast and the 1-segment digital broadcast are not necessarily simulcasts, in which the same content is broadcast at the same time, reception may not need to be switched.

In the technique disclosed in Japanese Patent KOKAI Publication No. 2007-251480, for example, reception can be switched between a 12-segments digital broadcast and a 1-segment digital broadcast by determining whether a television receiver is being operated or not, or whether the broadcasts are simulcasts or not.

The 1-segment digital broadcasting is intended to transmit simple moving video for mobile terminals such as mobile telephones, and is inferior to the 12-segments digital broadcasting in terms of video quality. Accordingly, when a 12-segments digital broadcast and a 1-segment digital broadcast are simulcasts, video and audio in the 12-segments digital broadcast should desirably be transcoded for mobile terminals, such that video and audio are viewed and heard with higher quality than the 1-segment digital broadcast.

Furthermore, closed-caption information, as well as the video and audio, of the 12-segments digital broadcast needs to be transcoded. However, the closed-caption information transcoded from a 12-segments digital broadcast may not comply with the requirements for closed caption for mobile terminals. In such a case, the closed caption may collapse and become unreadable.

It is therefore an object of the present invention to provide a video processing apparatus and a video processing method capable of converting a 12-segments digital broadcast into video data with better quality than a 1-segment digital broadcast, and adding a closed caption that is readable even on a small screen of a mobile terminal apparatus.

According to the present embodiment, it is possible to convert a 12-segments digital broadcast into video data with better quality than a 1-segment digital broadcast, and adding a closed caption that is readable even on a small screen of a mobile terminal apparatus.

The invention can be more fully understood from the following detailed description when taken in conjunction with the accompanying drawings, in which:
FIG. 1 is an exemplary perspective external view illustrating a video processing apparatus according to an embodiment of the present invention.
FIG. 2 is an exemplary schematic block diagram illustrating a configuration of the video processing apparatus according to the present embodiment.
FIG. 3 is an exemplary block diagram illustrating a functional configuration of the video processing application program used in the video processing apparatus according to the present embodiment.
FIG. 4 is an exemplary diagram illustrating a configuration focusing on the video processing application program used in the image processing apparatus according to the present embodiment.
FIG. 5 is an exemplary flowchart illustrating a procedure of video processing in the video processing application program used in the video processing apparatus according to the present embodiment.
FIG. 6 is an exemplary flowchart illustrating a procedure of video processing in the video processing application used in the video processing apparatus according to the present embodiment.
FIG. 7 is an exemplary schematic diagram illustrating a method of determination of whether digital broadcasts are simulcasts and detecting a lag between the digital broadcasts in the video processing apparatus, according to the present embodiment.

Hereinafter, an embodiment of the present invention will be described with reference to the accompanying drawings.

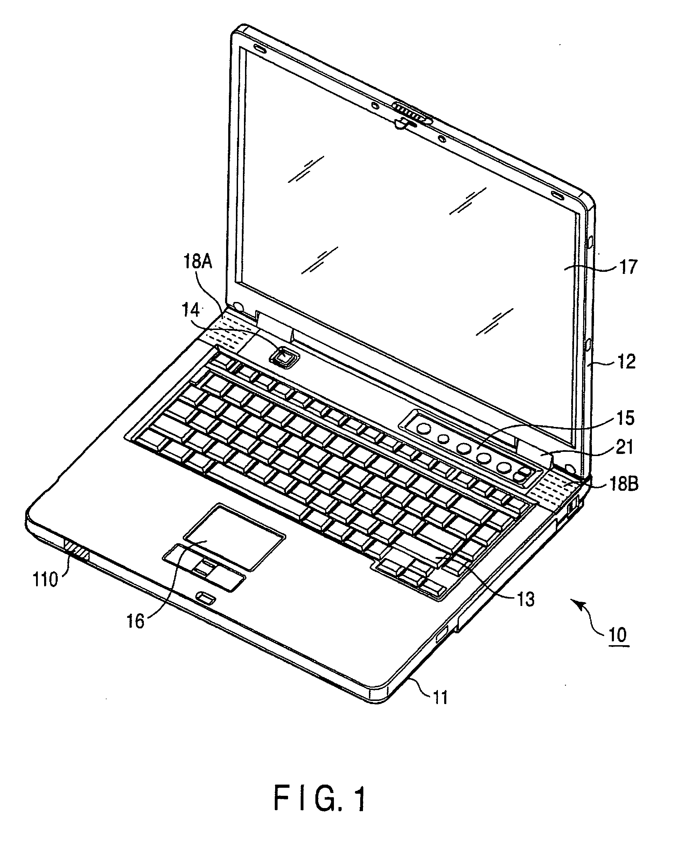

First, a configuration of a video processing apparatus according to an embodiment of the present invention will be described with reference to FIG. 1. A video processing apparatus of the present embodiment is embodied as a notebook personal computer 10, for example. It is to be noted that the video processing apparatus, which will be described as the notebook personal computer 10 in the present embodiment, is not limited thereto. Any device capable of receiving digital broadcasts (a 12-segments digital broadcast and a 1-segment digital broadcast) may be used, such as an digital video recorder (DVR) or a television set equipped with a recording function.

The personal computer 10 comprises a video processing application program (hereinafter also referred to as video processing application) that operates under an operating system (OS). The video processing application program determines whether a received 12-segments digital broadcast (first digital broadcast) and a received 1-segment digital broadcast (second digital broadcast) are simulcasts (broadcasts having the same content and broadcast at the same time). When it is determined that the 12-segments digital broadcast and the 1-segment digital broadcast are simulcasts, the first closed-caption data is separated from the 12-segments digital broadcast. First video data and first audio data of the 12-segments digital broadcast, from which the first closed-caption data is separated, are converted into moving picture data (such as a format for mobile terminal devices) smaller in data volume than the first video data and the first audio data. Second closed-caption data separated from the 1-segment digital broadcast is then multiplexed with the converted moving picture data and audio data.

The video processing application program determines whether the 12-segment digital broadcast and the 1-segment digital broadcast are simulcasts based on program metadata included in the 12-segments digital broadcast and the 1-segment digital broadcast. It is to be noted that the program metadata is at least one of Electronic Program Guide (EPG) information, audio metadata, and video metadata. The video processing application program detects lag information between the 12-segments digital broadcast and the 1-segment digital broadcast based on the program metadata, the audio data, and the video data. The lag information refers to information indicating a lag in broadcast time between the 12-segments digital broadcast and the 1-segment digital broadcast that are being simulcast. Based on the detected lag information, the moving picture data and the second closed-caption data included in the 1-segment digital broadcast are synchronized. Based on the synchronization process, the moving data, the audio data, and the second closed-caption data are multiplexed into one stream (by adding second closed-caption data to the moving picture data, for example). It is to be noted that the multiplexed moving picture data is larger in data capacity and having good quality than the 1-segment digital broadcast moving picture.

Accordingly, moving picture data, in which an image with a quality higher than a 1-segment digital broadcast and a closed caption optimized for mobile terminal devices for 1-segment digital broadcasting are multiplexed, can be viewed in a mobile terminal device and the like.

FIG. 1 is a perspective view of the computer 10 in a state in which a display unit is open.

The computer 10 comprises a computer main body (housing) 11 and a display unit 12. A display device formed of a thin film transistor liquid crystal display (LFT-LCD) 17 is mounted in the display unit 12.

The display unit 12 is pivotally (openably and closably) attached to the computer main body 11 via a hinge 21 between an open position in which an upper surface of the computer main body 11 is exposed and a closed position in which an upper surface of the computer main body 11 is covered. The computer main body 11 has a thin box-shaped housing. On an upper surface of the housing, there is arranged a keyboard 13, a power button 14 configured to power on/off the computer 10, an input operation panel 15, a touch pad 16, a memory card slot 110, speakers 18A, 18B, and so forth.

The input operation panel 15 is an input device configured to input an event corresponding to a pushed button, and includes a plurality of buttons for activating the respective functions.

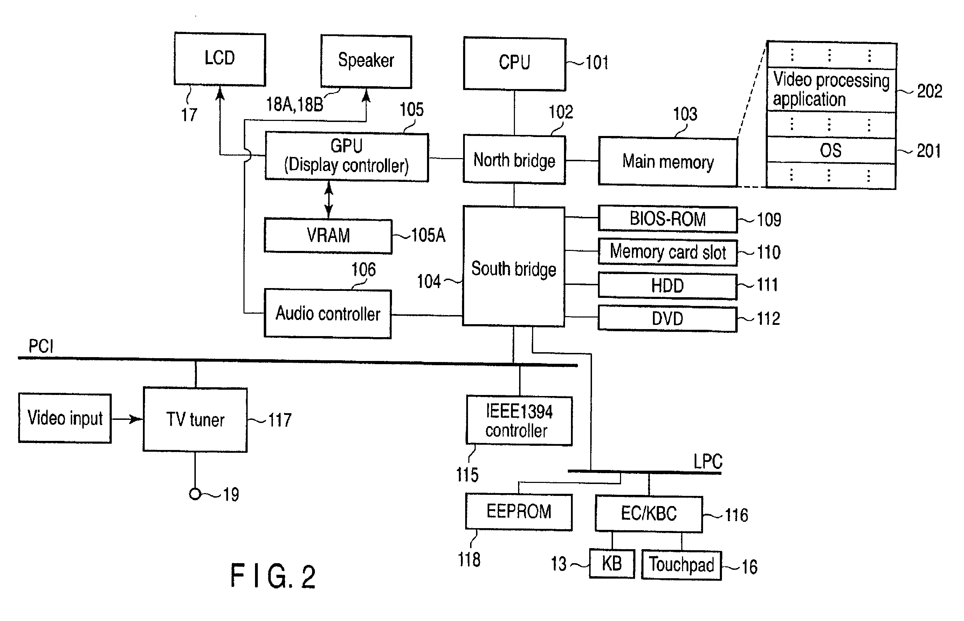

Next, a system configuration of the computer 10 will be described with reference to FIG. 2. FIG. 2 is a schematic block diagram illustrating a configuration of the computer 10.

As shown in FIG. 2, the computer 10 comprises a CPU (determination unit, conversion unit) 101, a north bridge 102, a main memory 103, a south bridge 104, a graphics processing unit (GPU) 105, a video memory (VRAM) 105A, a audio controller 106, a BIOS-ROM 109, a memory card slot 110, a hard disc drive (HDD) 111, a DVD drive 112, an IEEE1394 controller 115, an embedded controller/keyboard controller IC (EC/KBC) 116, a LCD 17, a TV tuner 117, an antenna 19, an EEPROM 118, and the like.

The CPU 101 is a processor configured to control operations of the computer 10, and executes various application programs, such as an operating system (OS) 201 and a video processing application program (determination unit, conversion unit) 202, which are loaded from the hard disc drive (HDD) 111 to the main memory 103. The video processing application program 202 is software capable of converting the moving picture data, in which an image of a quality higher than a 1-segment digital broadcast and a closed caption optimized for mobile terminal devices for 1-segment digital broadcasting are multiplexed, into a format that can be viewed in mobile terminal devices and the like. More specifically, the video processing application program 202 determines whether the received 12-segments digital broadcast and 1-segment digital broadcast are simulcasts. When the video processing application program 202 has determined that the received 12-segments digital broadcast and 1-segment digital broadcast are simulcasts, the first closed-caption data is separated from the 12-segments digital broadcast. After that, the video processing application program 202 converts the first video data and the first audio data of the 12-segments digital broadcast, from which the first closed-caption data is separated, into a moving picture data smaller in data volume than the first video data and the first audio data. Further, the video processing application program 202 multiplexes the second closed-caption data into the converted moving picture data. It is to be noted that the multiplexed moving picture data is larger in data capacity and better quality than the 1-segment digital broadcast.

The north bridge 102 is a bridge device configured to connect a local bus of the CPU 101 and the south bridge 104. A memory controller configured to control access of the main memory 103 is also included in the north bridge 102. Further, the north bridge 102 also has a function of performing communications with the GPU 105 via a serial bus compliant with the PCI Express standard.

The GPU 105 is a display controller configured to control the LCD 17, which is used as a display monitor of the computer 10. A display signal generated by the GPU 105 is transmitted to the LCD 17 of the display unit 12 through short-distance wireless communications.

The south bridge 104 controls devices on a low pin count (LPC) bus and devices on a peripheral component interconnect (PCT) bus. Further, the south bridge 104 includes an Integrated Drive Electronics (IDE) controller configured to control the hard disc drive (HDD) 111 and the DVD drive 112. Furthermore, the south bridge 104 also has a function of performing communications with the audio controller 106.

The audio controller 106 is a audio source device, and outputs audio data to be played back to speakers 18A, 18B.

The embedded controller/keyboard controller IC (EC/KBC) 116 is a 1-chip microcomputer including an embedded controller for power management and a keyboard controller configured to control the keyboard (KB) 13 and the touch pad 16. The embedded controller/keyboard controller IC (EC/KBC) 116 has a function of powering on/off the computer 10 according to the operation of the power button 14 by a user.

A memory card such as an SD memory card may be inserted to the memory card slot 110. The memory card may store moving picture data for mobile terminal devices, for example, that is converted by the video processing application 202. A mobile terminal device can play back the moving picture data stored in the memory card by inserting the memory card.

The TV tuner 117 is a tuner unit configured to receive a digital broadcast (such as a 12-segments digital broadcast and a 1-segment digital broadcast) via the antenna 19. The received digital broadcast is subjected to image processing (such as encoding and conversion processes) by the video processing application 202, for example, and recorded (stored) in the HDD 111, for example. The TV tuner 117 itself may be equipped with a hardware encoding function.

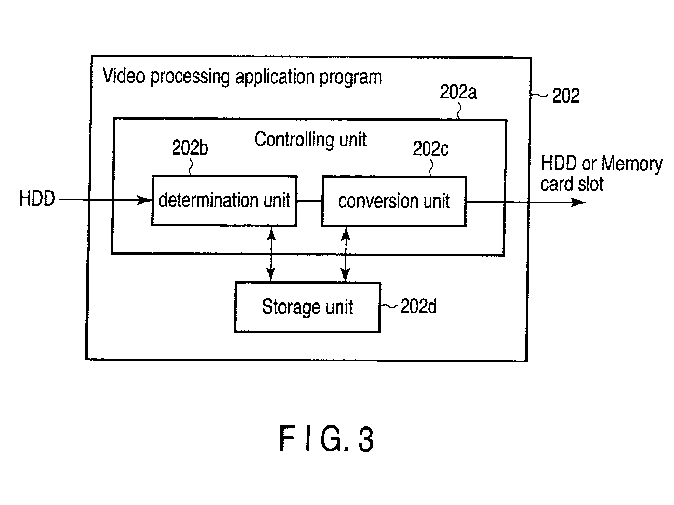

FIG. 3 is a block diagram illustrating a function configuration of the video processing application program 202.

The video processing application program 202 includes a controlling unit 202a, a determination unit 202b, a conversion unit 202c, and a storage unit 202d. The controlling unit 202a controls the determining unit 202b and the conversion unit 202c. The determination unit 202b determines whether a 12-segments digital broadcast and a 1-segment digital broadcast are simulcasts. Simulcast refers to a type of broadcasting in which a 12-segments digital broadcast and a 1-segment digital broadcast have the same content and are broadcast at the same time. Program metadata (Program information) included in digital broadcasts is used to determine whether the digital broadcasts are simulcasts. The program metadata includes at least one of EPG information, audio data and video data, but should desirably include EPG information as essential information. By further acquiring one or both of the audio data and the video data, in addition to the EPG information, precision of determination can be improved. The conversion unit 202c converts the first video data and the first audio data into moving picture data smaller in data volume than the first video data and the first audio data, and temporarily stores the converted moving picture data in the storage unit 202d. Further, the conversion unit 202c multiplexes the second closed-caption data into the converted moving picture data, and stores the multiplexed data in the HDD 111, the memory card slot 110, or the like. The storage unit 202d is a storage region where moving picture data before and after conversion and the above-described program metadata are temporarily stored.

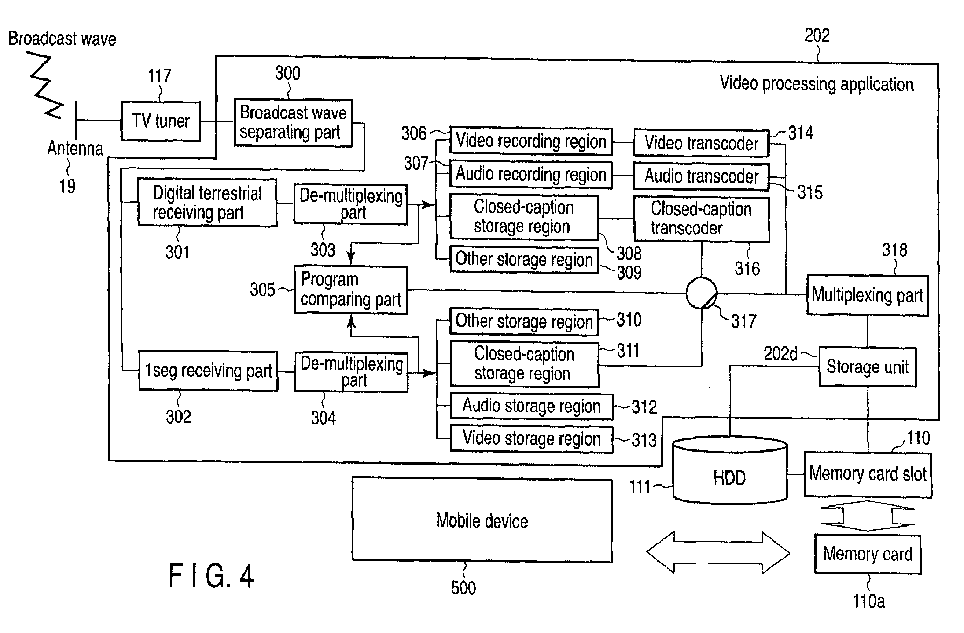

FIG. 4 is a block diagram illustrating a configuration focusing on the video processing application program 202.

The video processing application program 202 includes a broadcast wave separating part 300, a digital terrestrial television receiving part 301, a 1seg receiving part 302, de-multiplexing parts 303, 304, a program comparing part 305, video storage regions 306, 313, audio storage regions 307, 312, closed-caption storage regions 308, 311, other storage regions (information storage regions) 309, 310, a video transcoder 314, an audio transcoder 315, a closed-caption transcoder 316, a synchronization controlling part 317, a multiplexing part 318, and a storage unit 202d.

The broadcast wave separating part 300 separates a 12-segments digital broadcast (digital terrestrial broadcast) and a 1-segment digital broadcast (1seg broadcast), which are digital broadcasts received by the TV tuner 117 via the antenna 19, into a 12-segments digital broadcast and a 1-segment digital broadcast. The digital terrestrial television receiving part 301 receives the 12-segments digital broadcast separated by the broadcast wave separating part 300. The 1seg receiving part 302 receives the 1-segment digital broadcast separated by the broadcast wave separating part 300. The de-multiplexing part 303 separates video data (video data: first video data), audio data (audio data: first audio data), closed-caption data (first closed-caption data), and program metadata included in the 12-segments digital broadcast. The de-multiplexing part 304 separates video data (video data: second video data), audio data (audio data: second audio data), closed-caption data (second closed-caption data) and program metadata included in the 1-segment digital broadcast. The program comparing part 305 determines whether the 12-segments digital broadcast and the 1-segment digital broadcast are simulcasts based on the data separated by the de-multiplexing parts 303, 304. Further, the program comparing part 305 detects lag information between the 12-segments digital broadcast and the 1-segment digital broadcast. The video storage region 306 is a storage region where video data (encoded video data) of a 12-segments digital broadcast is stored.

The video storage region 313 is a storage region where video data (encoded video data) of a 1-segment digital broadcast is stored. The audio storage region 307 is a storage region where audio data (encoded audio data) of a 12-segments digital broadcast is stored. The audio storage region 312 is a storage region where audio data (encoded audio data) of a 1-segment digital broadcast is stored. The closed-caption storage region 308 is a storage region where closed-caption data of a 12-segments digital broadcast is stored. The closed-caption storage region 311 is a storage region where closed-caption data of a 1-segment digital broadcast is stored. The other storage region (information storage region) 309 is a storage region where data such as EPG information included in a 12-segments digital broadcast is stored. The other storage region (information storage region) 310 is a storage region where data such as EPG information included in a 1-segment digital broadcast is stored.

Further, the video transcoder 314 converts (transcodes) video data (encoded video data) of a 12-segments digital broadcast into video data (encoded data) smaller in capacity than the video data of the 12-segments digital broadcast. The video transcoder 314 is capable of converting video data of a 12-segments digital broadcast into video data with various capacities and bitrates. For example, the video transcoder 314 converts video data of a 12-segments digital broadcast into video data (moving picture data) smaller in capacity than the video data of the 12-segments digital broadcast and larger in capacity (higher in video quality) than video data (video data) of the 1-segment digital broadcast. The audio transcoder 315 converts (transcodes) audio data (audio data) of a 12-segments digital broadcast into audio data (audio data) smaller in capacity than the audio data. The audio transcoder 315 is capable of converting audio data of a 12-segments digital broadcast into audio data with different capacities and bitrates.

The audio transcoder 315 converts audio data of a 12-segments digital broadcast into audio data (audio data) smaller in capacity than the audio data of the 12-segments digital broadcast and larger in capacity (higher in sound quality) than the audio data (audio data) of a 1-segment digital broadcast, for example. The closed-caption transcoder 316 converts closed-caption data of a 12-segments digital broadcast. The closed-caption data converted by the closed-caption transcoder 316, however, cannot always be converted into closed-caption data that is readable on a small screen of the mobile terminal device 500. Accordingly, closed-caption data of a 12-segments digital broadcast converted by the closed-caption transcoder 316 will not be used aggressively. The synchronization controlling part 317 receives lag information between the 12-segments digital broadcast and the 1-segment digital broadcast from the program comparing part 305. The synchronization controlling part 317 synchronizes the converted video data and the closed-caption data separated from the 1-segment digital broadcast (as will be described later). The multiplexing part 318 multiplexes the converted video data synchronized by the synchronization controlling part 317 and the closed-caption data separated from the 1-segment digital broadcast. The multiplexing part 318 incorporates (multiplexes) the closed-caption data separated from the 1-segment digital broadcast into the converted video data. When it is determined whether the 12-segments digital broadcast and the 1-segment digital broadcast are simulcasts, the program comparing part 305 discriminates (determines) lag information in broadcast time, as well as whether the 12-segments digital broadcast and the 1-segment digital broadcast are simulcasts, using audio data and video data. Based on the lag information in broadcast time determined by the program comparing part 305, the synchronization controlling part 317 synchronizes video and audio of the 12-segments digital broadcast and closed-caption information of the 1-segment digital broadcast in multiplexing them. More specifically, a lag between video and audio of the 12-segments digital broadcast and closed-caption information of the 1-segment digital broadcast is corrected using the lag information in broadcast time, and multiplexed.

The moving picture data subjected to a process of incorporating closed-caption data separated from the 1-segment digital broadcast into the converted video data is temporarily stored in the storage unit 202d by the video processing application program 202. After that, the moving picture data is stored in the HDD 111 by the video processing application program 202. The moving picture data stored in the HDD 111 is stored in the memory card slot 110 via the memory card slot 110, for example, by the video processing application program 202. The moving picture data stored in the memory card 110a can be played back by a mobile terminal device 500, for example. Accordingly, when a 12-segments digital broadcast is generated for mobile terminal devices, moving picture data including closed-caption information that can be easily read by users can be generated by using closed-caption information (second closed-caption data) optimized for mobile terminal devices.

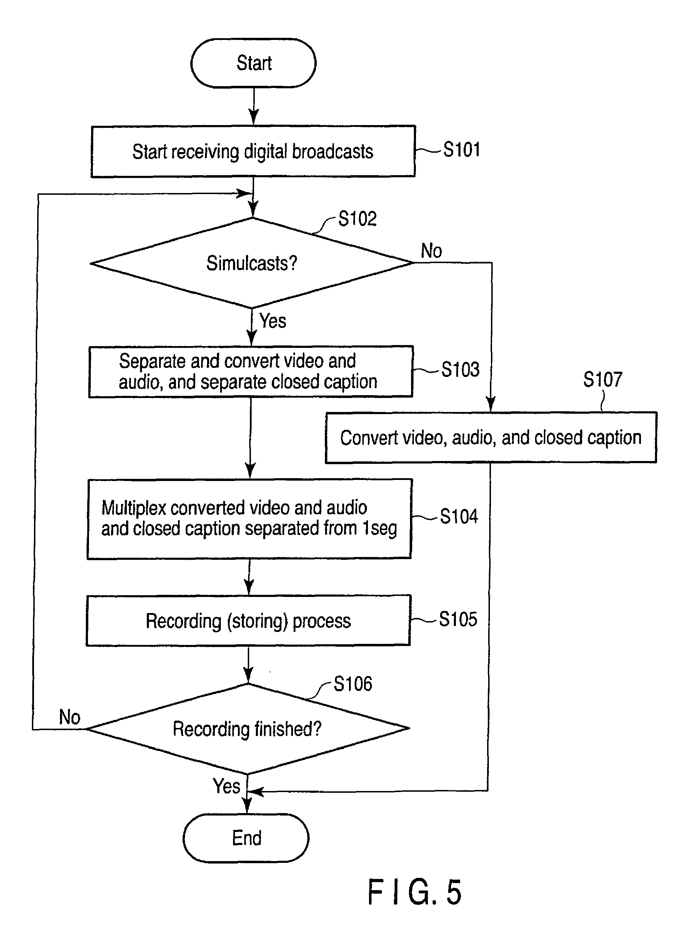

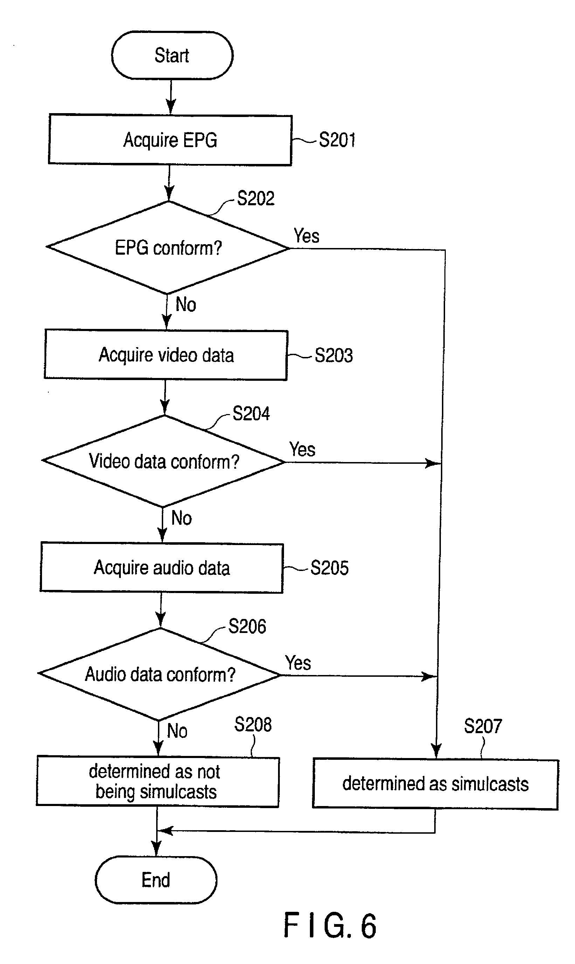

Next, the procedure of video processing according to the present embodiment will be described. FIGS. 5 and 6 are flowcharts illustrating the procedure of video processing in the video processing application program 202.

The CPU 101 activates the video processing application program 202 stored in the HDD 111, for example, loads it into the main memory 103, and executes it.

The CPU 101 causes the TV tuner 117 to start receiving digital broadcasts (12-segments digital broadcast and 1-segment digital broadcast) via the antenna 19 (step S101). After that, the CPU 101 determines whether the received digital broadcasts (the 12-segments digital broadcast and the 1-segment digital broadcast) are simulcasts or not (step S102). When the CPU 101 has determined in step S102 that the received digital broadcasts (12-segments digital broadcast and 1-segment digital broadcast) are simulcasts (YES in step S102), closed-caption data is separated from the 12-segments digital broadcast. The separated video data and audio data are converted by the video processing application program 202 into a moving video format (such as Moving Picture Experts Group (MPEG) 4) that can be played back by a mobile terminal device 500, for example. Further, the video processing application program 202 separates the closed-caption data from the received 1-segment digital broadcast (step S103). It is to be noted that the moving video format that can be played back by the mobile terminal device 500 is converted into video data larger in data capacity (higher in video quality) than a 1-segment digital broadcast (1seg broadcast), for example.

The CPU 101 performs a process of multiplexing the converted moving picture data of MPEG4, for example, and closed-caption data from the 1-segment digital broadcast (step S104). In the multiplexing process, lag information in broadcast time between the 12-segments digital broadcast and the 1-segment digital broadcast is detected, and a synchronization process is performed after correcting the lag based on the detected lag information.

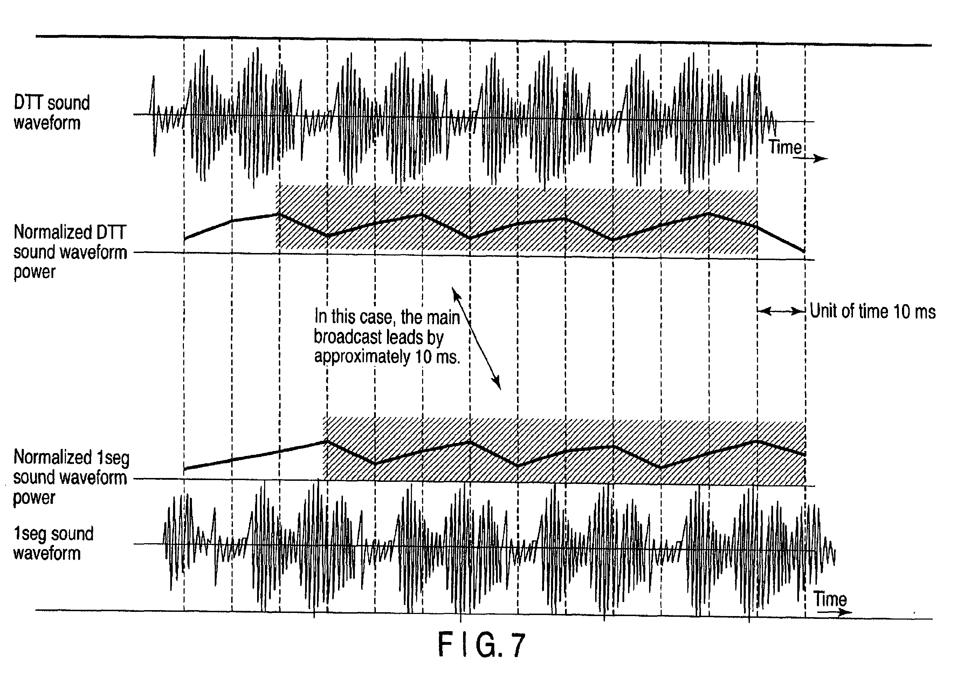

The method of detecting the lag information will be described with reference to FIG. 7. FIG. 7 schematically shows a method of determination whether digital broadcasts are simulcasts and detecting lag information between the digital broadcasts. For example, as shown in FIG. 7, the CPU 101 normalizes a sound waveform of a digital terrestrial broadcast (12-segments digital broadcast) and the power of the sound waveform is shown in a graph. Similarly, the CPU 101 normalizes the sound waveform of the 1seg broadcast (1-segment digital broadcast) and the power of the sound waveform is shown in a graph. In this case, when the CPU 101 performs a comparison (matching process) per unit time of 10 ms, for example, the two waveforms agree (the diagonally shaded areas in the two waveforms agree), and the sound waveform of the digital terrestrial broadcast (12-sements digital broadcast) leads the sound waveform of the 1seg broadcast (1-segment digital broadcast) by 10 ms. The power of the sound waveforms is the value obtained by adding the square of the audio sample value per unit of time (10 ms, for example).

Next, the matching process will be described in further detail. First, the video processing application program 202 stores the power of the sound waveform of each of the digital terrestrial broadcast and the 1seg broadcast for approximately 30 seconds, for example (using a ring buffer, for example). The CPU 101 performs a matching process so as to determine whether one second, for example, in an arbitrary part of the power of the sound waveform of the stored 30 seconds of the 1seg broadcast agrees with the power of the sound waveform of the digital terrestrial broadcast. More specifically, the CPU 101 performs a matching process for the maximum of 5 approximate seconds, for example, by shifting the power of the sound waveform by the obtained unit of tie (10 ms in the above-described case). In the matching process, even if exact agreement is not observed, small errors may be permitted and agreement may be assumed. In the matching process, transition trends of the powers of the sound waveforms of the digital terrestrial broadcast and the 1seg broadcast are detected so as to determine whether they match each other. The transition trend of the power of the sound waveform refers to the length, gradient, and the like of a graph of a power of a sound waveform per unit of time, for example. The matching process is performed by the CPU 101 repeatedly every 1 minute, for example.

When the CPU has detected an area where the sound waveforms of the digital terrestrial broadcast and the 1seg broadcast match, and determined that the digital terrestrial broadcast and the 1seg broadcast are simulcasts, difference in time between the matching sections indicates lag information in broadcast time. For example, when matching between the diagonally shaded areas of the powers of the sound waveforms of the digital terrestrial broadcast and the 1seg broadcast has been detected, as shown in FIG. 7, lag information in broadcast time is 10 ms. When determination as to whether the digital terrestrial broadcast and the 1seg broadcast are simulcasts is performed by means of audio, audios of the digital terrestrial broadcast and the 1seg broadcast are compared. If the compared audios are determined as being the same audio, the CPU 101 determines that the digital terrestrial broadcast and the 1seg broadcast are simulcasts.

When the CPU 101 fails to detect an area where the powers of the sound waveforms of the digital terrestrial broadcast and the 1seg broadcast match, on the other hand, lag information in broadcast time cannot be detected. In order to determine whether the digital terrestrial broadcast and the 1seg broadcast are simulcasts, the sound waveform powers (audio data) of the digital broadcasts may be compared by the CPU 101, as shown in FIG. 7. Further, the comparison may be made using video data and EPG information received from the digital broadcasts, which will be described below.

Next, in step S104, the CPU 101 performs a multiplexing process of adding close-captioned data separated from the 1-segment digital broadcast to the converted moving picture data, such as MPEG4. That is, moving picture data is generated by adding sharp closed-caption data separated from the 1-segment digital broadcast to moving picture data higher in video quality (larger in capacity) than the 1-segment digital broadcast converted from the 12-segment digital broadcast. After that, the CPU 101 performs a process of recording (storing) the generated moving picture data in the HDD 111, for example (step S105). When the recording process is not continued and finished (YES in step S106), the process is finished. When the recording process is continued, the process shifts to step S102.

When the CPU 101 determines in step S102 that the digital terrestrial broadcast and the 1seg broadcasts are not simulcasts (NO in step S102), video data, audio data, and closed-caption data of the 12-segment digital broadcast are converted into a format that can be played back by the mobile terminal device 500, for example, such as MPEG4 (step S107).

Next, the method of determination whether the digital terrestrial broadcast and the 1seg broadcast are simulcasts in step S102 will be described with reference to FIG. 6.

The CPU 101 loads the video processing application 202 into the main memory 103. The CPU 101 receives digital broadcasts (12-segments digital broadcast and the 1-segment digital broadcast) via the TV tuner 117, and also receives EPG information included in the digital broadcasts (step S201). The CPU 101 determines whether the received EPG information items match each other (step S202). If the CPU 101 has determined that the received EPG information items match each other in step S202 (YES in step S202), the received digital broadcasts (12-segments digital broadcast and 1-segment digital broadcast) are determined as being simulcasts (step S207). When the CPU 101 has determined that the received EPG information items do not match each other in step S202 (NO in step S202), the CPU 101 acquires video data of the digital broadcasts (12-segments digital broadcast and 1-segment digital broadcast) (step S203). After that, the CPU 101 determines whether the acquired video data items of the digital broadcasts match each other (step S204). When the CPU 101 has determined that the video data items match each other in step S204 (YES in step S204), the received 12-segments digital broadcast and 1-segment digital broadcast are determined as being simulcasts (step S207). When the CPU 101 has determined that the video data items do not match each other in step S204 (NO in step S204), the CPU 101 acquires audio data of the digital broadcasts (step S205). After that, the CPU 101 determines whether the audio data items of the acquired digital broadcasts match each other (step S206). When the CPU 101 has determined that the audio data items match each other in step S206 (YES in step S206), the received 12-segments digital broadcast and 1-segment digital broadcast are determined as being simulcasts (step s207). When the CPU 101 has determined in step S206 that the audio data items do not match each other (NO in step S206), the 12-segments digital broadcast and the 1-segment digital broadcast are determined as not being simulcasts (step S208).

Even if the digital broadcasts (12-segments digital broadcast and 1-segment digital broadcast) are simulcasts, they may not be broadcast at the same time due to a lag, as shown in FIG. 7. Accordingly, the CPU 101 performs a process of matching the powers o the sound waveforms of the digital broadcasts by the unit of 10 ms or 20 ms, for example. In this matching process, difference within 20 ms for example, is regarded as being within the limits (the above-described process will be referred to as "process A"). Further, process A may be performed immediately before step S207 is performed.

Further, switching may be performed between the process of determination whether video data items match (steps 203, 204) and the process of determination whether audio data items match (steps S205, S206). Moreover, switching may be performed between the process of determination whether EPG information items match (step S202) and the process of determination whether the video data items match, or whether the audio data items match.

According to the above-described embodiment, a 12-segments digital broadcast is converted into video data higher in video quality than a 1-sgment digital broadcast, and closed-caption data that is readable even on a small screen of a mobile terminal device can be added to the converted moving picture data. Further, by comparing audio data and video data, in addition to EPG information, in determination whether the digital broadcasts are simulcasts, precision of determination can be improved. Moreover, by using audio data in determination whether the digital broadcasts are simulcasts, the case where the schedule has been changed during a program can be dealt with.

Further, the 12-sements digital broadcast according to the present embodiment is not limited to a digital terrestrial broadcast, but may be a satellite broadcast, a cable television, or a cable broadcast transmitted via a communication transmission line.

Further, the video processing apparatus according to the present embodiment does not need to be embodied as the computer 10, but may be embodied as various kinds of consumer video processing devices such as a personal data assistance (PDA). Moreover, the functions of the video processing application may be embodied as hardware, such as a digital signal processor (DSP) or a microcomputer.

A module can be accomplished in software and hardware.

Moreover, the present invention is not limited to what has been described in the above-described embodiment, but may be embodied by modifying the constituent elements without departing from the scope of the invention. Further, various inventions may be made by appropriately combining the constituent elements disclosed in the embodiment. For example, some of the constituent elements may be deleted from all the constituent elements disclosed in the embodiment. Moreover, constituent elements of different embodiments may be combined as appropriate.

## Claims

1. A video processing apparatus, **characterized by** comprising:
a receiving unit (117) configured to receive a first digital broadcast and a second digital broadcast, the first digital broadcast comprising first video data, first audio data, and first closed-caption data, the second digital broadcast consisting of less data than the first digital broadcast and comprising second video data, second audio data, and second closed-caption data;
a determination unit (202d) configured to determine whether the first digital broadcast and the second digital broadcast, as received by the receiving unit, are simulcasts, a simulcast being determined when the same content is broadcast at the same time; and
a conversion unit (202c) configured to separate the first and second closed-caption data from the first and second digital broadcasts, convert the first video data and the first audio data into moving picture data smaller in volume than the first video data and the first audio data, and multiplex the second closed-caption data separated from the second digital broadcast into the moving picture data when the determination unit has determined that the first digital broadcast and the second digital broadcast are simulcasts.

2. The video processing apparatus according to claim 1, **characterized in that** the determination unit determines, on the basis of program metadata included in each of the first digital broadcast and the second digital broadcast, whether the first digital broadcast and the second digital broadcast are simulcasts.

3. The video processing apparatus according to claim 2, **characterized in that** the program metadata is at least one of electronic program guide data, audio metadata, and video metadata.

4. The video processing apparatus according to claim 2, **characterized in that** the conversion unit (202c) detects, on the basis of the program metadata, lag data representing a difference in broadcast time between the first digital broadcast and the second digital broadcast, synchronizes the moving picture data and the second closed-caption data in accordance with the detected lag data, and multiplexes the moving picture data and the second closed-caption data.

5. The video processing apparatus according to claim 1, **characterized in that** the moving picture data is larger in volume than the data constituting the second digital broadcast.

6. A video processing method used in a video processing apparatus, the video processing apparatus comprising a receiving unit (117) configured to receive a first digital broadcast and a second digital broadcast, the first digital broadcast comprising first video data, first audio data, and first closed-caption data, and the second digital broadcast consisting of less data than that constituting the first digital broadcast and including second video data, second audio data, and second closed-caption data, the method **characterized by** comprising:
determining whether the first digital broadcast and the second digital broadcast, as received by the receiving unit (117), are simulcasts, a simulcast being determined when the same content is broadcast at the same time; and
separating the first and second closed-caption data from the first and second digital broadcasts when the determination unit has determined that the first digital broadcast and the second digital broadcast are simulcasts, converting the first video data and the first audio data into moving picture data smaller in volume than the first video data and the first audio data, and multiplexing the second closed-caption data separated from the second digital broadcast into the moving picture data.

7. The video processing method according to claim 6, **characterized in that** the determination of whether the first digital broadcast and the second digital broadcast are simulcasts is based on program metadata included in each of the first digital broadcast and the second digital broadcast.

8. The video processing method according to claim 7, **characterized in that** the program metadata is at least one of electronic program guide data, audio metadata, and video metadata.

9. The video processing method according to claim 7, **characterized in that** lag data representing a difference in broadcast time between the first digital broadcast and the second digital broadcast is detected on the basis of the program metadata, the moving picture data and the second closed-caption data are synchronized in accordance with the detected lag data, and the moving picture data and the second closed-caption data are multiplexed.

10. The video processing method according to claim 6, **characterized in that** the moving picture data is larger in volume than the data constituting the second digital broadcast.

## Patentansprüche

1. Videoverarbeitungsvorrichtung, **gekennzeichnet durch**:
eine Empfangseinheit (117), die ausgestaltet ist, um ein erstes digitales Rundfunksignal und ein zweites digitales Rundfunksignal zu empfangen, wobei das erste digitale Rundfunksignal erste Videodaten, erste Audiodaten und erste Untertiteldaten (closed-caption data) enthält, wobei das zweite digitale Rundfunksignal aus weniger Daten als das erste digitale Rundfunksignal besteht und zweite Videodaten, zweite Audiodaten und zweite Untertiteldaten umfasst;
eine Bestimmungseinheit (202d), die ausgestaltet ist, um zu bestimmen, ob das erste digitale Rundfunksignal und das zweite digitale Rundfunksignal, wenn sie von der Empfangseinheit empfangen werden, Simultanübertragungen sind, wobei eine Simultanübertragung bestimmt wird, wenn der gleiche Inhalt zum gleichen Zeitpunkt gesendet wird, und
eine Wandlereinheit (202c), die ausgestaltet ist, um die ersten und zweiten Untertiteldaten von den ersten und zweiten digitalen Rundfunksignalen zu trennen, die ersten Videodaten und die ersten Audiodaten mit Bilddaten, die im Volumen kleiner als die ersten Videodaten und die ersten Audiodaten sind, umzuwandeln, und die zweiten Untertiteldaten, die von dem zweiten Digitalrundfunksignal getrennt wurden, in die Bewegbilddaten zu multiplexen, wenn die Bestimmungseinheit bestimmt hat, dass das erste digitale Rundfunksignal und das zweite digitale Rundfunksignal Simultanübertragungen sind.

2. Videoverarbeitungsvorrichtung nach Anspruch 1, **dadurch gekennzeichnet, dass** die Bestimmungseinheit beruhend auf der Grundlage von Programmmetadaten, die in dem ersten digitalen Rundfunksignal und dem zweiten digitalen Rundfunksignal enthalten sind, bestimmt, ob das erste digitale Rundfunksignal und das zweite digitale Rundfunksignal Simultanübertragungen sind.

3. Videoverarbeitungsvorrichtung nach Anspruch 2, **dadurch gekennzeichnet, dass** die Programmmetadaten zumindest eins ausgewählt aus elektronischen Programm-Guide-Daten, Audiometadaten und Videometadaten sind.

4. Videoverarbeitungsvorrichtung nach Anspruch 2, **dadurch gekennzeichnet, dass** die Wandlereinheit (202c) auf der Grundlage der Programmmetadaten Verzögerungsdaten erfasst, die eine Differenz in der Rundfunkzeit zwischen dem ersten digitalen Rundfunksignal und dem zweiten digitalen Rundfunksignal darstellt, die Bewegbilddaten und die Untertiteldaten in Übereinstimmung mit den erfassten Verzögerungsdaten synchronisiert, und die Bewegbilddaten und die Untertiteldaten multiplext.

5. Videoverarbeitungsvorrichtung nach Anspruch 1, **dadurch gekennzeichnet, dass** die Bewegbilddaten im Volumen größer als die Daten sind, die das zweite digitale Rundfunksignal bilden.

6. Videoverarbeitungsverfahren zur Verwendung in eine Videoverarbeitungsvorrichtung, wobei die Videoverarbeitungsvorrichtung eine Empfangseinheit (117) umfasst, die ausgestaltet ist, um ein erstes digitales Rundfunksignal und ein zweites digitales Rundfunksignal zu empfange, wobei das erste digitale Rundfunksignal erste Videodate, erste Audiodate und erste Untertiteldaten umfasst, und wobei das zweite digitale Rundfunksignal aus weniger Daten besteht, als sie das erste digitale Rundfunksignal bilden, und zweite Videodaten, zweite Audiodaten und zweite Untertiteldaten enthält, wobei das Verfahren **dadurch gekennzeichnet ist, dass** es umfasst:
Bestimmen, ob das erste digitale Rundfunksignal und das zweite digitale Rundfunksignal, wenn sie von der Empfangseinheit (117) empfangen werden, Simultanübertragungen sind, wobei eine Simultanübertragung bestimmt wird, wenn der gleiche Inhalt zur gleichen Zeit übertragen wird; und
Trennen der ersten und zweiten Untertiteldaten aus den ersten und zweiten digitalen Rundfunksignalen, wenn die Bestimmungseinheit bestimmt hat, dass das erste digitale Rundfunksignal und das zweite digitale Rundfunksignal Simultanübertragungen sind, Umwandeln der ersten Videodaten und der ersten Audiodaten in Bewegbilddaten, die kleiner im Volumen als die ersten Videodaten und die ersten Audiodaten sind, und Multiplexen der zweiten Untertiteldaten, die von dem zweiten digitalen Rundfunksignal getrennt wurden, in die Bewegbilddaten.

7. Videoverarbeitungsverfahren nach Anspruch 6, **dadurch gekennzeichnet, dass** die Bestimmung, ob das erste digitale Rundfunksignal und das zweite digitale Rundfunksignal Simultanübertragungen sind, beruhend auf Programmmetadaten erfolgt, die in dem ersten digitalen Rundfunksignal und dem zweiten digitalen Rundfunksignale erhalten sind.

8. Videoverarbeitungsverfahren nach Anspruch 7, **dadurch gekennzeichnet, dass** die Programmmetadaten zumindest eins ausgewählt aus elektronischen Programm-Guide-Daten, Audiometadaten und Videometadaten sind.

9. Videoverarbeitungsverfahren nach Anspruch 7, **dadurch gekennzeichnet, dass** Verzögerungsdaten, die eine Differenz in der Rundfunkzeit zwischen dem ersten digitalen Rundfunksignal und dem zweiten digitalen Rundfunksignal darstellen, auf der Grundlage der Programmmetadaten erfasst werden, wobei die Bewegbilddaten und die zweiten Untertiteldaten in Übereinstimmung mit den erfassten Verzögerungsdaten synchronisiert werden, und wobei die Bewegbilddaten und die zugehörigen Untertiteldaten multiplext werden.

10. Videoverarbeitungsverfahren nach Anspruch 6, **dadurch gekennzeichnet, dass** die Bewegbilddaten im Volumen größer als die Daten sind, die das zweite digitale Rundfunksignal bilden.

## Revendications

1. Appareil de traitement vidéo, **caractérisé en ce qu'**il comprend :
une unité de réception (117) configurée pour recevoir une première diffusion numérique et une seconde diffusion numérique, la première diffusion numérique comprenant des premières données vidéo, et des premières données de sous-titrage, la seconde diffusion numérique étant composée d'un nombre de données inférieur à la première diffusion numérique et comprenant des secondes données vidéo, des secondes données audio, et des secondes données de sous-titrage ;
une unité de détermination (202d) configurée pour déterminer si la première diffusion numérique et la seconde diffusion numérique, reçues par l'unité de réception, sont des diffusions simultanées, une diffusion simultanée étant déterminée lorsque le même contenu est diffusé en même temps ; et
une unité de conversion (202c) configurée pour séparer les premières et les secondes données de sous-titrage de la première et de la seconde diffusions numériques, convertir les premières données vidéo et les premières données audio en données d'image animée d'un volume inférieur aux premières données vidéo et aux premières données audio, et multiplexer les secondes données de sous-titrage séparées de la seconde diffusion numérique en données d'image animée lorsque l'unité de détermination a déterminé que la première diffusion numérique et la seconde diffusion numérique sont des diffusions simultanées.

2. Appareil de traitement vidéo selon la revendication 1, **caractérisé en ce que** l'unité de détermination détermine, sur la base de métadonnées de programme incluses dans chacune de la première diffusion numérique et de la seconde diffusion numérique, si la première diffusion numérique et la seconde diffusion numérique sont des diffusions simultanées.

3. Appareil de traitement vidéo selon la revendication 2, **caractérisé en ce que** les métadonnées de programme sont au moins l'une de données de guide de programme électronique, de métadonnées audio, et de métadonnées vidéo.

4. Appareil de traitement vidéo selon la revendication 2, **caractérisé en ce que** l'unité de conversion (202c) détecte, sur la base des métadonnées de programme, des données de retard qui représentent une différence de moment de diffusion entre la première diffusion numérique et la seconde diffusion numérique, synchronise les données d'image animée et les secondes données de sous-titrage selon les données de retard détectées, et multiplexe les données d'image animée et les secondes données de sous-titrage.

5. Appareil de traitement vidéo selon la revendication 1, **caractérisé en ce que** les données d'image animée ont un volume supérieur aux données qui constituent la seconde diffusion numérique.

6. Procédé de traitement vidéo utilisé dans un appareil de traitement vidéo, l'appareil de traitement vidéo comprenant une unité de réception (117) configurée pour recevoir une première diffusion numérique et une seconde diffusion numérique, la première diffusion numérique comprenant des premières données vidéo, des premières données audio, et des premières données de sous-titrage, et la seconde diffusion numérique étant composée d'un nombre de données inférieur à celles qui constituent la première diffusion numérique et comprenant des secondes données vidéo, des secondes données audio, et des secondes données de sous-titrage, le procédé étant **caractérisé en ce qu'**il comprend :
la détermination du fait que la première diffusion numérique et la seconde diffusion numérique, reçues par l'unité de réception (117), soient des diffusions simultanées, une diffusion simultanée étant déterminée lorsque le même contenu est diffusé en même temps ; et
la séparation des premières et des secondes données de sous-titrage de la première et de la seconde diffusions numériques lorsque l'unité de détermination a déterminé que la première diffusion numérique et la seconde diffusion numérique sont des diffusions simultanées, la conversion des premières données vidéo et des premières données audio en données d'image animée ayant un volume inférieur aux premières données vidéo et aux premières données audio, et le multiplexage des secondes données de sous-titrage séparées de la seconde diffusion numérique en données d'image animée.

7. Procédé de traitement vidéo selon la revendication 6, **caractérisé en ce que** la détermination du fait que la première diffusion numérique et la seconde diffusion numérique soient des diffusions simultanées est basée sur des métadonnées de programmes incluses dans chacune de la première diffusion numérique et de la seconde diffusion numérique.

8. Procédé de traitement vidéo selon la revendication 7, **caractérisé en ce que** les métadonnées de programme sont au moins l'une de données de guide de programme électronique, de métadonnées audio, et de métadonnées vidéo.

9. Procédé de traitement vidéo selon la revendication 7, **caractérisé en ce que** des données de retard qui représentent une différence de moment de diffusion entre la première diffusion numérique et la seconde diffusion numérique sont détectées sur la base des métadonnées de programme, les données d'image animée et les secondes données de sous-titrage sont synchronisées selon les données de retard détectées, et les données d'image animée et les secondes données de sous-titrage sont multiplexées.

10. Procédé de traitement vidéo selon la revendication 6, **caractérisé en ce que** les données d'image animée ont un volume supérieur aux données qui constituent la seconde diffusion numérique.
